# EUROPEAN PATENT APPLICATION

(11) **EP 1 617 606 A1**
(43) Date of publication of application: **18.01.2006**
(21) Application number: 04016850.2
(22) Date of filing: 16.07.2004
(51) Int. Cl.: H04L 12/56

(54) **Scheduling mode switching for uplink transmissions**

(71) Applicant: MATSUSHITA ELECTRIC INDUSTRIAL CO., LTD., Kadoma-shi, Osaka 571-8501 (JP)
(72) Inventor: Petrovic, Dragan, 64295 Darmstadt (DE); Löhr, Joachim, 64287 Darmstadt (DE)
(74) Representative: Grünecker, Kinkeldey, Stockmair & Schwanhäusser Anwaltssozietät

(57) **Abstract**

The invention relates to a method for controlling by a base station the scheduling mode used by a mobile terminal for carrying out uplink data transmissions within a mobile communication network and to a base station performing this method. In order to provide a mechanism for scheduling mode switching on the network side the invention suggests to receive feedback for controlling scheduling of uplink data transmission between the mobile terminal and the base station, to estimate the buffer occupancy at the mobile terminal based on the feedback received, and to switch the mobile terminal from a scheduling mode presently used for uplink transmission to another scheduling mode based on the estimated buffer occupancy. In particular "rate up" requests in a rate controlled scheduling mode and buffer occupancy reports or traffic volume measurements may be used to estimate the buffer occupancy at the mobile terminal.

## Description

### FIELD OF THE INVENTION

The invention relates to a method for controlling by a base station the scheduling mode used by a mobile terminal for carrying out uplink data transmissions within a mobile communication network and to a base station performing this method.

### TECHNICAL BACKGROUND

W-CDMA (Wideband Code Division Multiple Access) is a radio interface for IMT-2000 (International Mobile Communication), which was standardized for use as the 3^{rd} generation wireless mobile telecommunication system. It provides a variety of services such as voice services and multimedia mobile communication services in a flexible and efficient way. The standardization bodies in Japan, Europe, USA, and other countries have jointly organized a project called the 3^{rd} Generation Partnership Project (3GPP) to produce common radio interface specifications for W-CDMA.

The standardized European version of IMT-2000 is commonly called UMTS (Universal Mobile Telecommunication System). The first release of the specification of UMTS has been published in 1999 (Release 99). In the mean time several improvements to the standard have been standardized by the 3GPP in Release 4 and Release 5 and discussion on further improvements is ongoing under the scope of Release 6.

The dedicated channel (DCH) for downlink and uplink and the downlink shared channel (DSCH) have been defined in Release 99 and Release 4. In the following years, the developers recognized that for providing multimedia services - or data services in general - high speed asymmetric access had to be implemented. In Release 5 the high-speed downlink packet access (HSDPA) was introduced. The new high-speed downlink shared channel (HS-DSCH) provides downlink high-speed access to the user from the UMTS Radio Access Network (RAN) to the communication terminals, called user equipments in the UMTS specifications.

### Packet Scheduling

Packet scheduling may be a radio resource management algorithm used for allocating transmission opportunities and transmission formats to the users admitted to a shared medium. Scheduling may be used in packet based mobile radio networks in combination with adaptive modulation and coding to maximize throughput/capacity by e.g. allocating transmission opportunities to the users in favorable channel conditions. The packet data service in UMTS may be applicable for the interactive and background traffic classes, though it may also be used for streaming services. Traffic belonging to the interactive and background classes is treated as non real time (NRT) traffic and is controlled by the packet scheduler. The packet scheduling methodologies can be characterized by:
- **Scheduling period/frequency:** The period over which users are scheduled ahead in time.
- **Serve order**: The order in which users are served, e.g. random order (round robin) or according to channel quality (C/I or throughput based).
- **Allocation method:** The criterion for allocating resources, e.g. same data amount or same power/code/time resources for all queued users per allocation interval.

The packet scheduler for uplink is distributed between Radio Network Controller (RNC) and user equipment in 3GPP UMTS R99/R4/R5. On the uplink, the air interface resource to be shared by different users is the total received power at a Node B, and consequently the task of the scheduler is to allocate the power among the user equipment(s). In current UMTS R99/R4/R5 specifications the RNC controls the maximum rate/power a user equipment is allowed to transmit during uplink transmission by allocating a set of different transport formats (modulation scheme, code rate, etc.) to each user equipment.

The establishment and reconfiguration of such a TFCS (transport format combination set) may be accomplished using Radio Resource Control (RRC) messaging between RNC and user equipment. The user equipment is allowed to autonomously choose among the allocated transport format combinations based on its own status e.g. available power and buffer status. In current UMTS R99/R4/R5 specifications there is no control on time imposed on the uplink user equipment transmissions. The scheduler may e.g. operate on transmission time interval basis.

### UMTS Architecture

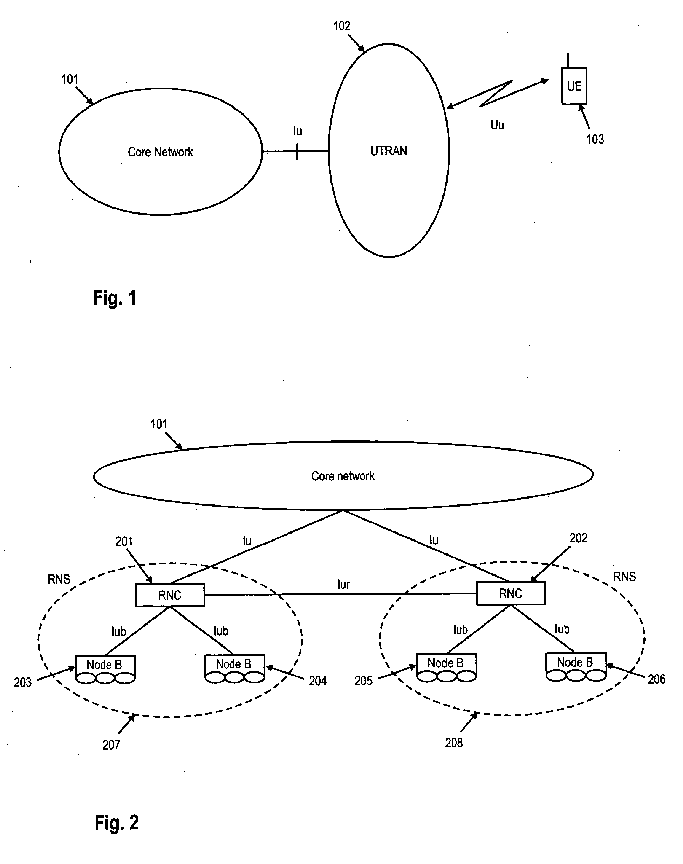

The high level R99/4/5 architecture of Universal Mobile Telecommunication System (UMTS) is shown in Fig. 1 (see 3GPP TR 25.401: "UTRAN Overall Description", available from http://www.3gpp.org). The network elements are functionally grouped into the Core Network (CN) 101, the UMTS Terrestrial Radio Access Network (UTRAN) 102 and the User Equipment (UE) 103. The UTRAN 102 is responsible for handling all radio-related functionality, while the CN 101 is responsible for routing calls and data connections to external networks. The interconnections of these network elements are defined by open interfaces (Iu, Uu). It should be noted that UMTS system is modular and it is therefore possible to have several network elements of the same type.

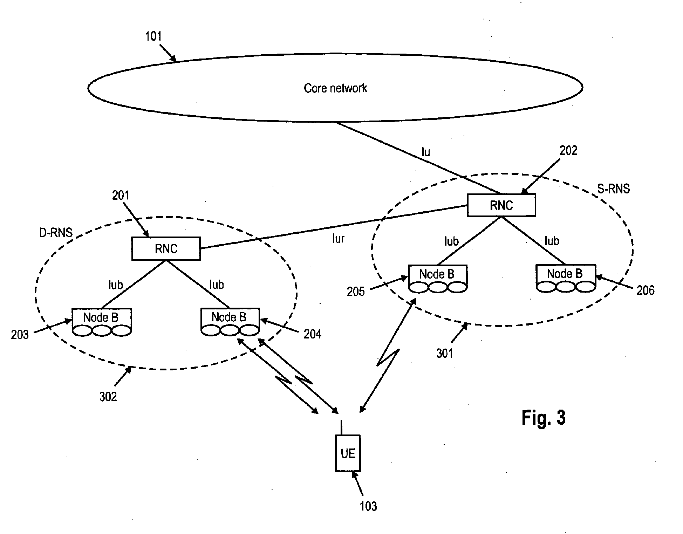

Fig. 2 illustrates the current architecture of UTRAN. A number of Radio Network Controllers (RNCs) 201, 202 are connected to the CN 101. Each RNC 201, 202 controls one or several base stations (Node Bs) 203, 204, 205, 206, which in turn communicate with the user equipments. An RNC controlling several base stations is called Controlling RNC (C-RNC) for these base stations. A set of controlled base stations accompanied by their C-RNC is referred to as Radio Network Subsystem (RNS) 207, 208. For each connection between User Equipment and the UTRAN, one RNS is the Serving RNS (S-RNS). It maintains the so-called lu connection with the Core Network (CN) 101. When required, the Drift RNS 302 (D-RNS) 302 supports the Serving RNS (S-RNS) 301 by providing radio resources as shown in Fig. 3. Respective RNCs are called Serving RNC (S-RNC) and Drift RNC (D-RNC). It is also possible and often the case that C-RNC and D-RNC are identical and therefore abbreviations S-RNC or RNC are used.

### Enhanced Uplink Dedicated Channel (E-DCH)

Uplink enhancements for Dedicated Transport Channels (DTCH) are currently studied by the 3GPP Technical Specification Group RAN (see 3GPP TR 25.896: "Feasibility Study for Enhanced Uplink for UTRA FDD (Release 6)", available at http://www.3gpp.org). Since the use of IP-based services become more important, there is an increasing demand to improve the coverage and throughput of the RAN as well as to reduce the delay of the uplink dedicated transport channels. Streaming, interactive and background services could benefit from this enhanced uplink.

One enhancement is the usage of adaptive modulation and coding schemes (AMC) in connection with Node B controlled scheduling, thus an enhancement of the Uu interface. In the existing R99/R4/R5 system the uplink maximum data rate control resides in the RNC. By relocating the scheduler in the Node B the latency introduced due to signaling on the interface between RNC and Node B may be reduced and thus the scheduler may be able to respond faster to temporal changes in the uplink load. This may reduce the overall latency in communications of the user equipment with the RAN. Therefore Node B controlled scheduling is capable of better controlling the uplink interference and smoothing the noise rise variance by allocating higher data rates quickly when the uplink load decreases and respectively by restricting the uplink data rates when the uplink load increases. The coverage and cell throughput may be improved by a better control of the uplink interference.

Another technique, which may be considered to reduce the delay on the uplink, is introducing a shorter TTI (Transmission Time Interval) length for the E-DCH compared to other transport channels. A transmission time interval length of 2ms is currently investigated for use on the E-DCH, while a transmission time interval of 10ms is commonly used on the other channels. Hybrid ARQ, which was one of the key technologies in HSDPA, is also considered for the enhanced uplink dedicated channel. The Hybrid ARQ protocol between a Node B and a user equipment allows for rapid retransmissions of erroneously received data units, and may thus reduce the number of RLC (Radio Link Control) retransmissions and the associated delays. This may improve the quality of service experienced by the end user.

To support enhancements described above, a new MAC sub-layer is introduced which will be called MAC-eu in the following (see 3GPP TSG RAN WG1, meeting #31, Tdoc R01-030284, "Scheduled and Autonomous Mode Operation for the Enhanced Uplink"). The entities of this new sub-layer, which will be described in more detail in the following sections, may be located in user equipment and Node B. On user equipment side, the MAC-eu performs the new task of multiplexing upper layer data (e.g. MAC-d) data into the new enhanced transport channels and operating HARQ protocol transmitting entities.

Further, the MAC-eu sub-layer may be terminated in the S-RNC during handover at the UTRAN side. Thus, the reordering buffer for the reordering functionality provided may also reside in the S-RNC.

### E-DCH MAC Architecture at the user equipment

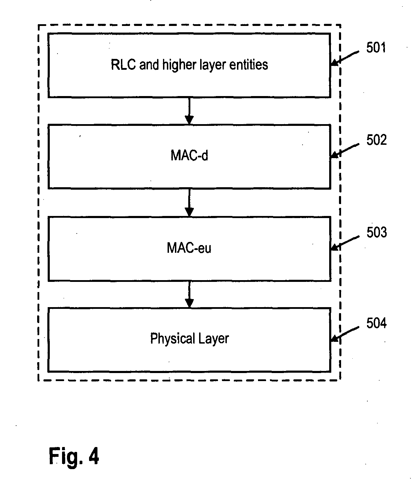

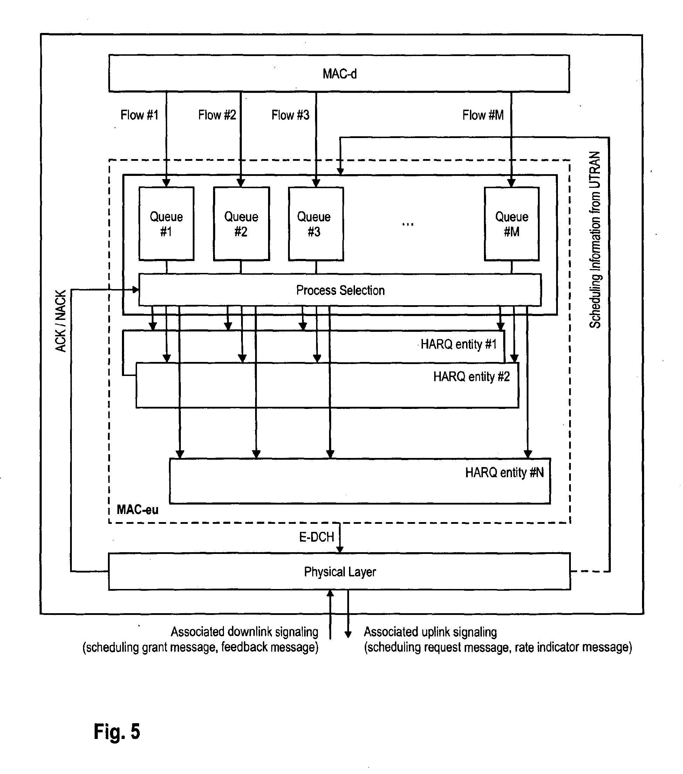

Fig. 4 shows the exemplary overall E-DCH MAC architecture on user equipment side. A new MAC functional entity, the MAC-eu 403, is added to the MAC architecture of Rel/99/4/5. The MAC-eu 405 entity is depicted in more detail in Fig. 5.

There are M different data flows (MAC-d) carrying data packets to be transmitted from user equipment to Node B. These data flows can have different QoS (Quality of Service), e.g. delay and error requirements, and may require different configurations of HARQ instances. Therefore the data packets can be stored in different Priority Queues. The set of HARQ transmitting and receiving entities, located in user equipment and Node B respectively will be referred to as HARQ process. The scheduler will consider QoS parameters in allocating HARQ processes to different priority queues. MAC-eu entity receives scheduling information from Node B (network side) via Layer 1 signaling.

### E-DCH MAC Architecture at the UTRAN

In soft handover operation the MAC-eu entities in the E-DCH MAC Architecture at the UTRAN side may be distributed across Node B (MAC-eub) and S-RNC (MAC-eur). The scheduler in Node B chooses the active users and performs rate control by determining and signaling a commanded rate, suggested rate or TFC (Transport Format Combination) threshold that limits the active user (UE) to a subset of the TCFS (Transport Format Combination Set) allowed for transmission.

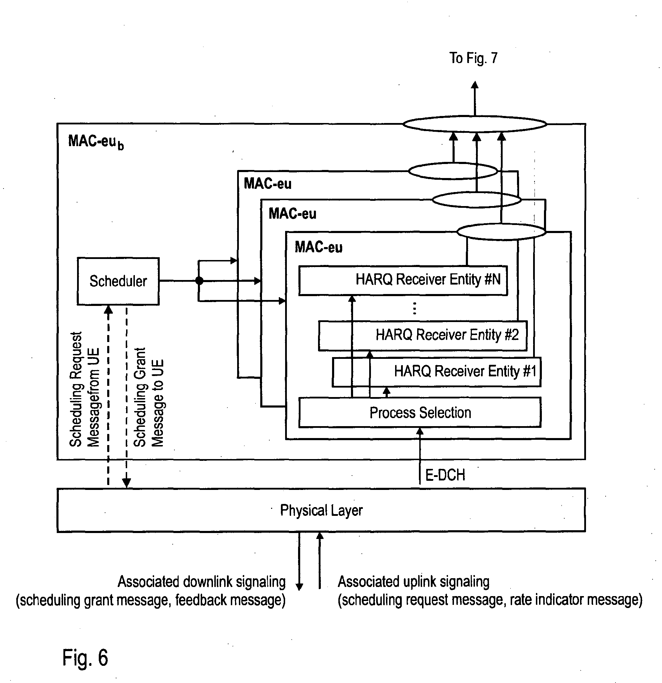

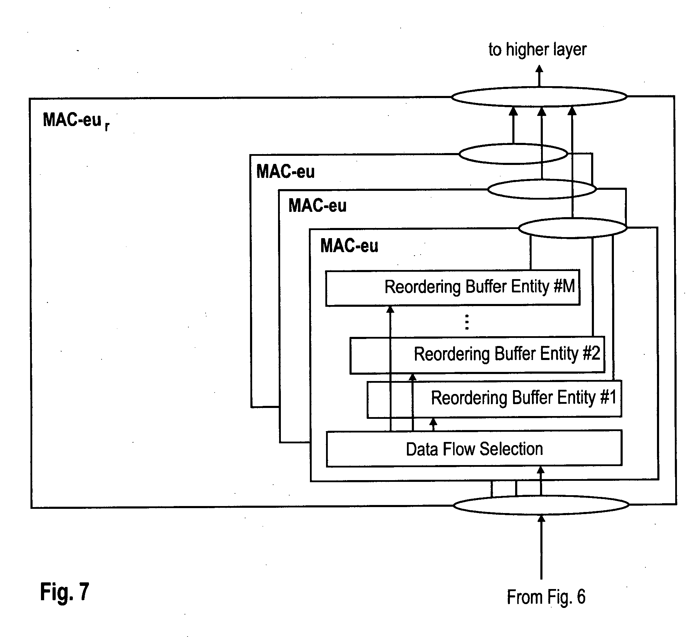

Every MAC-eu entity corresponds to a user (UE). In Fig. 6 the Node B MAC-eu architecture is depicted in more detail. It can be noted that each HARQ Receiver entity is assigned certain amount or area of the soft buffer memory for combining the bits of the packets from outstanding retransmissions. Once a packet is received successfully, it is forwarded to the reordering buffer providing the in-sequence delivery to upper layer. According to the depicted implementation, the reordering buffer resides in S-RNC during soft handover (see 3GPP TSG RAN WG 1, meeting #31: "HARQ Structure", Tdoc R1-030247, available of http://www.3gpp.org). In Fig. 7 the S-RNC MAC-eu architecture which comprises the reordering buffer of the corresponding user (UE) is shown. The number of reordering buffers is equal to the number of data flows in the corresponding MAC-eu entity on user equipment side. Data and control information is sent from all Node Bs within Active Set to S-RNC during soft handover.

It should be noted that the required soft buffer size depends on the used HARQ scheme, e.g. an HARQ scheme using incremental redundancy (IR) requires more soft buffer than one with chase combining (CC).

### E-DCH Signaling

E-DCH associated control signaling required for the operation of a particular scheme consists of uplink and downlink signaling. The signaling depends on uplink enhancements being considered.

In order to enable Node B controlled scheduling (e.g. Node B controlled time and rate scheduling), user equipment has to send some request message on the uplink for transmitting data to the Node B. The request message may contain status information of a user equipment e.g. buffer status, power status, channel quality estimate. The request message is in the following referred to as Scheduling Information (SI). Based on this information a Node B can estimate the noise rise and schedule the UE. With a grant message sent in the downlink from the Node B to the UE, the Node B assigns the UE the TFCS with maximum data rate and the time interval, the UE is allowed to send. The grant message is in the following referred to as Scheduling Assignment (SA).

In the uplink user equipment has to signal Node B with a rate indicator message information that is necessary to decode the transmitted packets correctly, e.g. transport block size (TBS), modulation and coding scheme (MCS) level, etc. Furthermore, in case HARQ is used, the user equipment has to signal HARQ related control information (e.g. Hybrid ARQ process number, HARQ sequence number referred to as New Data Indicator (NDI) for UMTS Rel. 5, Redundancy version (RV), Rate matching parameters etc.)

After reception and decoding of transmitted packets on enhanced uplink dedicated channel (E-DCH) the Node B has to inform the user equipment if transmission was successful by respectively sending ACK/NAK in the downlink.

### Mobility Management within Rel99/4/5 UTRAN

Before explaining some procedures connected to mobility management, some terms frequently used in the following are defined first.

A radio link may be defined as a logical association between single UE and a single UTRAN access point. Its physical realization comprises radio bearer transmissions.

A handover may be understood as a transfer of a UE connection from one radio bearer to another (hard handover) with a temporary break in connection or inclusion / exclusion of a radio bearer to / from UE connection so that UE is constantly connected UTRAN (soft handover). Soft handover is specific for networks employing Code Division Multiple Access (CDMA) technology. Handover execution may controlled by S-RNC in the mobile radio network when taking the present UTRAN architecture as an example.

The active set associated to a UE comprises a set of radio links simultaneously involved in a specific communication service between UE and radio network. An active set update procedure may be employed to modify the active set of the communication between UE and UTRAN. The procedure may comprise three functions: radio link addition, radio link removal and combined radio link addition and removal. The maximum number of simultaneous radio links is set to eight. New radio links are added to the active set once the pilot signal strengths of respective base stations exceed certain threshold relative to the pilot signal of the strongest member within active set.

A radio link is removed from the active set once the pilot signal strength of the respective base station exceeds certain threshold relative to the strongest member of the active set. Threshold for radio link addition is typically chosen to be higher than that for the radio link deletion. Hence, addition and removal events form a hysteresis with respect to pilot signal strengths.

Pilot signal measurements may be reported to the network (e.g to S-RNC) from UE by means of RRC signaling. Before sending measurement results, some filtering is usually performed to average out the fast fading. Typical filtering duration may be about 200 ms contributing to handover delay. Based on measurement results, the network (e.g. S-RNC) may decide to trigger the execution of one of the functions of active set update procedure (addition / removal of a Node B to / from current Active Set).

### E-DCH - Node B controlled scheduling

Node B controlled scheduling is one of the technical features for E-DCH which is foreseen to enable more efficient use of the uplink power resource in order to provide a higher cell throughput in the uplink and to increase the coverage. The term "Node B controlled scheduling" denotes the possibility for the Node B to control, within the limits set by the RNC, the set of TFCs from which the UE may choose a suitable TFC. The set of TFCs from which the UE may choose autonomously a TFC is in the following referred to as "Node B controlled TFC subset".

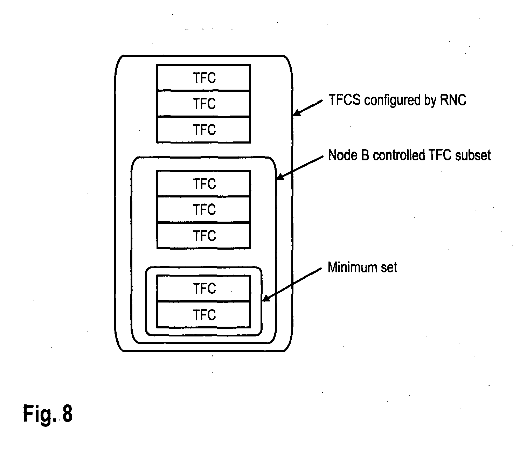

The "Node B controlled TFC subset" is a subset of the TFCS configured by RNC as seen in Fig. 8. The UE selects a suitable TFC from the "Node B controlled TFC subset" employing the Rel5 TFC selection algorithm. Any TFC in the "Node B controlled TFC subset" might be selected by the UE, provided there is sufficient power margin, sufficient data available and TFC is not in the blocked state. Two fundamental approaches to scheduling UE transmission for the E-DCH exist. The scheduling schemes can all be viewed as management of the TFC selection in the UE and mainly differs in how the Node B can influence this process and the associated signaling requirements.

### Node B controlled Rate Scheduling

The principle of this scheduling approach is to allow Node B to control and restrict the transport format combination selection of the user equipment by fast TFCS restriction control. A Node B may expand/reduce the "Node B controlled subset", which user equipment can choose autonomously on suitable transport format combination from, by Layer-1 signaling. In Node B controlled rate scheduling all uplink transmissions may occur in parallel but at a rate low enough such that the noise rise threshold at the Node B is not exceeded. Hence, transmissions from different user equipments may overlap in time. With Rate scheduling a Node B can only restrict the uplink TFCS but does not have any control of the time when UEs are transmitting data on the E-DCH. Due to Node B being unaware of the number of UEs transmitting at the same time no precise control of the uplink noise rise in the cell may be possible (see 3GPP TR 25.896: "Feasibility study for Enhanced Uplink for UTRA FDD (Release 6)", version 1.0.0, available at http://www.3gpp.org).

Two new Layer-1 messages are introduced in order to enable the transport format combination control by Layer-1 signaling between the Node B and the user equipment. A Rate Request (RR) may be sent in the uplink by the user equipment to the Node B. With the RR the user equipment can request the Node B to expand/reduce the "Node controlled TFC Subset" by one step. Further, a Rate Grant (RG) may be sent in the downlink by the Node B to the user equipment. Using the RG, the Node B may change the "Node B controlled TFC Subset", e.g. by sending up/down commands. The new "Node B controlled TFC Subset" is valid until the next time it is updated.

### Node B controlled Rate and Time Scheduling

The basic principle of Node B controlled time and rate scheduling is to allow (theoretically only) a subset of the user equipments to transmit at a given time, such that the desired total noise rise at the Node B is not exceeded. Instead of sending up/down commands to expand/reduce the "Node B controlled TFC Subset" by one step, a Node B may update the transport format combination subset to any allowed value through explicit signaling, e.g. by sending a TFCS indicator (which could be a pointer).

Furthermore, a Node B may set the start time and the validity period a user equipment is allowed to transmit. Updates of the "Node B controlled TFC Subsets" for different user equipments may be coordinated by the scheduler in order to avoid transmissions from multiple user equipments overlapping in time to the extent possible. In the uplink of CDMA systems, simultaneous transmissions always interfere with each other. Therefore by controlling the number of user equipments, transmitting simultaneously data on the E-DCH, Node B may have more precise control of the uplink interference level in the cell. The Node B scheduler may decide which user equipments are allowed to transmit and the corresponding TFCS indicator on a per transmission time interval (TTI) basis based on, for example, buffer status of the user equipment, power status of the user equipment and available interference Rise over Thermal (RoT) margin at the Node B.

Two new Layer-1 messages are introduced in order to support Node B controlled time and rate scheduling. A Scheduling Information Update (SI) may be sent in the uplink by the user equipment to the Node B. If user equipment finds a need for sending scheduling request to Node B (for example new data occurs in user equipment buffer), a user equipment may transmit required scheduling information. With this scheduling information the user equipment provides Node B information on its status, for example its buffer occupancy and available transmit power.

A Scheduling assignment (SA) may be transmitted in the downlink from a Node B to a user equipment. Upon receiving the scheduling request the Node B may schedule a user equipment based on the scheduling information (SI) and parameters like available RoT margin at the Node B. In the Scheduling Assignment (SA) the Node B may signal the TFCS indicator and subsequent transmission start time and validity period to be used by the user equipment.

Node B controlled time and rate scheduling provides a more precise RoT control compared to the rate-only controlled scheduling as already mentioned before. However this more precise control of the interference at this Node B is obtained at the cost of more signaling overhead and scheduling delay (scheduling request and scheduling assignment messages) compared to rate control scheduling.

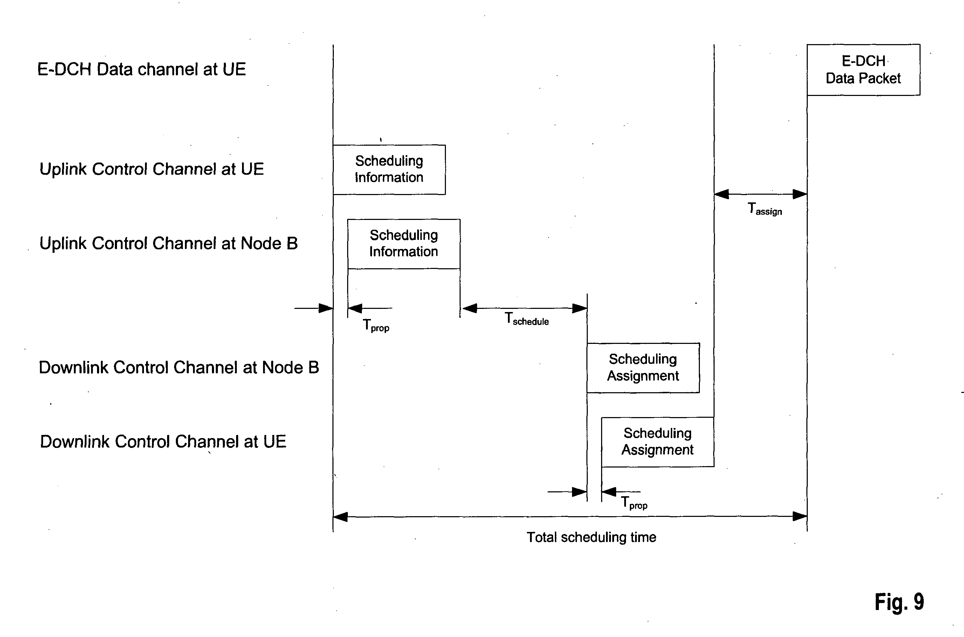

In Fig. 9 a general scheduling procedure with Node B controlled time and rate scheduling is shown. When a user equipment wants to be scheduled for transmission of data on E-DCH it first sends a scheduling request to Node B. Tₚᵣₒₚ denotes here the propagation time on the air interface. The contents of this scheduling request are information (scheduling information) for example buffer status and power status of the user equipment. Upon receiving that scheduling request, the Node B may process the obtained information and determine the scheduling assignment. The scheduling will require the processing time T_{schedule}.

The scheduling assignment, which comprises the TFCS indicator and the corresponding transmission start time and validity period, may be then transmitted in the downlink to the user equipment. After receiving the scheduling assignment the user equipment will start transmission on E-DCH in the assigned transmission time interval.

The use of either rate scheduling or time and rate scheduling may be restricted by the available power as the E-DCH will have to co-exist with a mix of other transmissions by the user equipments in the uplink. The co-existence of the different scheduling modes may provide flexibility in serving different traffic types. For example, traffic with small amount of data and/or higher priority such as TCP ACK/NACK may be sent using only a rate control mode with autonomous transmissions compared to using time and rate-control scheduling. The former would involve lower latency and lower signaling overhead.

As already mentioned above currently two scheduling modes are under consideration for E-DCH, rate controlled and time and rate controlled scheduling mode. In the rate controlled mode UEs are allowed to transmit autonomously up to a maximum data rate, signaled by Node B while in the time and rate controlled mode a subset of UEs are allowed to transmit up to a maximum data rate signaled by Node B. Hence in the rate controlled mode, lower data rates are continuously available for all UEs, while in the time and rate controlled mode higher data rates are available for a subset of UEs and for time intervals designated by Node B. At the same time, the buffer occupancy in UEs may change and therefore also the optimal scheduling mode.

### SUMMARY OF THE INVENTION

The object of the invention is to provide a mechanism for scheduling mode switching on the network side.

The object is solved by the subject matter of the independent claims. Advantageous embodiments of the invention are subject matters to the dependent claims.

One embodiment of the invention relates to a method for controlling by a base station the scheduling mode used by a mobile terminal for carrying out uplink data transmissions within a mobile communication network. According to this embodiment the base station may receive feedback for controlling the scheduling of uplink data transmission between the mobile terminal and the base station, and may estimate estimating the buffer occupancy at the mobile terminal based on the feedback received. Next, the base station may switch the mobile terminal from a scheduling mode presently used for uplink transmission to another scheduling mode based on the estimated buffer occupancy. In a further embodiment of the invention, the uplink transmissions are carried out using an EDCH.

In another embodiment of the invention the scheduling mode is switched in case the estimated buffer occupancy is below or above a predetermined threshold.,

In a further embodiment, it is assumed that the mobile terminal carries out uplink data transmission in a rate controlled scheduling mode. In this case, the base station may estimate the buffer occupancy based on the number of requests to increase the rate for uplink transmissions received by the base station within a predetermined time period.

In a further variation, the base station may decide to switch the mobile terminal to a time and rate controlled scheduling mode, if the number of requests to increase the rate for uplink transmissions received by the base station within the predetermined time period is above a predetermined threshold.

In a further embodiment, the mobile terminal carries out uplink data transmission in a time and rate controlled scheduling mode. In this case the feedback may be received in form of reports on the priority-queue occupancy of at least one data flow at the mobile terminal and the base station may estimate the buffer occupancy estimated based on these reports.

Alternatively, the feedback may be received in form of traffic volume measurement reports indicating the RLC buffer occupancy for at least one logical channel of the mobile terminal and the base station may estimate the buffer occupancy based on the traffic volume measurement reports.

In this alternative, the base station may receive the traffic volume measurement reports from a network element terminating radio resource control protocol entity on the network side.

In another embodiment of the invention the decision on whether to change the scheduling of a mobile terminal for uplink transmission may be based on a predetermined threshold. In this case the base station decides to switch the mobile terminal to a rate controlled scheduling mode, if the estimated buffer occupancy is below a predetermined threshold.

In a further embodiment the predetermined time period and/or the threshold is configured by a network element terminating radio resource control protocol entity on the network side. As indicated above, the buffer occupancy threshold may indicate a threshold above or below which a switching of the scheduling mode by the base station is performed.

In a further embodiment of the invention it is foreseen that the base station may use individual predetermined time periods and/or thresholds for estimating the buffer occupancy depending on a traffic class type and/or priority of the uplink transmission data transmitted by the mobile terminal.

In a variation of this embodiment, the individual predetermined time periods and/or individual thresholds may be configured by the network element terminating radio resource control protocol entity on the network side.

A further embodiment of the invention provides a base station for controlling the scheduling mode used by a mobile terminal for carrying out uplink data transmissions within a mobile communication network. The base station may comprise receiving means for receiving feedback for controlling scheduling of uplink data transmission between the mobile terminal and the base station. Further the base station may comprise processing means for estimating the buffer occupancy at the mobile terminal based on the feedback received, and for switching the mobile terminal from a scheduling mode presently used for uplink transmission to another scheduling mode based on the estimated buffer occupancy.

In another embodiment of the invention the base station may further comprise means adapted to perform the steps of the controlling method according to the different embodiments of the invention outlined above.

A further embodiment of the invention relates to a mobile communication system comprising a base station as described above and a mobile terminal.

Moreover, the invention according to a further embodiment provides a computer-readable medium for storing instructions that, when executed by a processor of a base station, cause the base station to control the scheduling mode used by a mobile terminal for carrying out uplink data transmissions within a mobile communication network. This may be achieved by causing the base station to receive feedback for controlling scheduling of uplink data transmission between the mobile terminal and the base station, to estimate the buffer occupancy at the mobile terminal based on the feedback received, and to switch the mobile terminal from a scheduling mode presently used for uplink transmission to another scheduling mode based on the estimated buffer occupancy.

In a further embodiment of the invention the computer readable medium may further store instructions that, when executed by the processor of a base station, cause the base station to perform the steps of the method according one of the various embodiments outlined above.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows the high-level architecture of UMTS,
- **Fig. 2**: shows the architecture of the UTRAN according to UMTS R99/4/5,
- **Fig. 3**: shows a Drift and a Serving Radio Subsystem,
- **Fig. 4**: shows the E-DCH MAC architecture at a user equipment,
- **Fig. 5**: shows the MAC-eu architecture at a user equipment,
- **Fig. 6**: shows the MAC-eu architecture at a Node B,
- **Fig. 7**: shows the MAC-eu architecture at a RNC,
- **Fig. 8**: shows transport format combination sets for Node B controlled scheduling,
- **Fig. 9**: shows the operation of a time and rate controlled scheduling mode,
- **Fig. 10**: shows switching of the scheduling mode of an observed mobile terminal according to an embodiment of the invention, wherein the terminals transmission buffer occupancy, the used scheduling mode and noise rise management is illustrated,
- **Fig. 11 & 12**: show a Node B controlled switching from a time and rate controlled scheduling mode to a rate controlled scheduling mode according to different embodiments of the invention,
- **Fig. 13**: shows a Node B controlled switching from a rate controlled scheduling mode to a time and rate controlled scheduling mode according to another embodiment of the invention,
- **Fig. 14**: shows a flow chart of a control method controlling the switching from a time and rate controlled scheduling mode to a rate controlled scheduling mode according to an embodiment of the invention, and
- **Fig. 15**: shows a flow chart of a control method controlling the switching from a rate controlled scheduling mode to a time and rate controlled scheduling mode according to an embodiment of the invention.

### DETAILED DESCRIPTION OF THE INVENTION

The following paragraphs will describe various embodiments of the invention. For exemplary purposes only, most of the embodiments are outlined in relation to a UMTS communication system and the terminology used in the subsequent sections mainly relates to the UMTS terminology. However, the used terminology and the description of the embodiments with respect to a UMTS architecture is not intended to limit the principles and ideas of the inventions to such systems.

Also the detailed explanations given in the Technical Background section above are merely intended to better understand the mostly UMTS specific exemplary embodiments described in the following and should not be understood as limiting the invention to the described specific implementations of processes and functions in the mobile communication network.

The ideas and principles that will be outlined in the subsequent sections may be applicable to mobile communication systems providing uplink transmissions which may employ different scheduling modes. Further, the principles outlined herein may be especially applicable to systems in which separate amounts of the allowable noise rise are allocated for UEs in the different used scheduling modes.

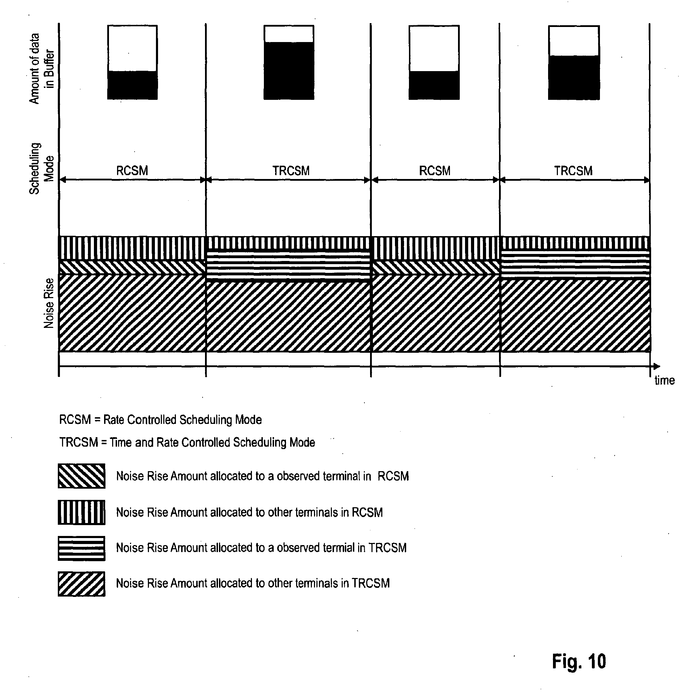

An example for noise rise management by a Node B controlling uplink transmissions for the observed UE is shown in the Fig. 10. For exemplary purposes it may be assumed that separate amounts of the allowable noise rise are allocated for UEs in rate controlled scheduling mode and time and rate controlled scheduling mode.

Scheduling mode switching may be performed for different UEs independently. The noise rise allocated to an observed UE is plotted separately (see legend of Fig. 10). According to one embodiment of the invention, the UE is operating in time and rate controlled scheduling mode for higher amounts of data in the buffer while for lower amounts of data in the buffer the UE is operating in rate controlled scheduling mode.

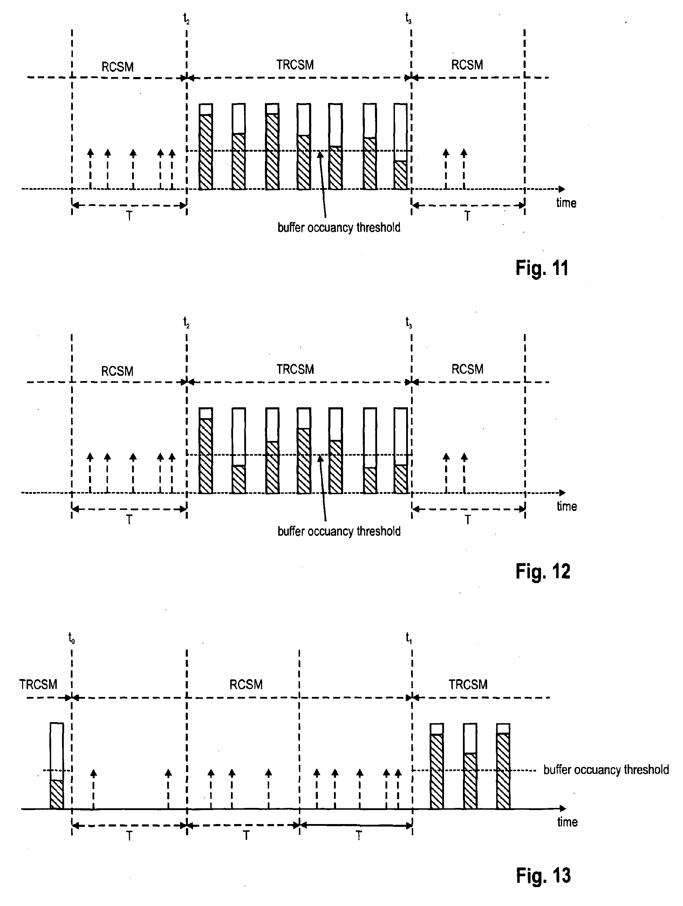

Fig. 11, 12 and 13 plot exemplary mechanism of scheduling mode-switching depending on UE buffer occupancy according to different embodiments of the invention. The buffer occupancy may be estimated by the observing Node B based on different feedback information which is available for the different scheduling modes.

In an exemplary embodiment of the invention UE reporting on the buffer occupancy in time and rate controlled scheduling mode is done per Priority Queue of MAC-d flow.

As already mentioned above, according to the UMTS specifications buffer occupancy reporting is currently not available in the rate controlled scheduling mode. In this mode, "rate up" and "rate down" messages may be used to allow for basic TFCS control by Node B. Since all UEs which are configured e.g. for E-DCH operation are sending controlling messages periodically in rate controlled scheduling mode, buffer occupancy reports may be embedded in these messages, however, they may cause large uplink interference.

However, it should be noted that controlling messages on the uplink are transmitted by Layer 1 signaling such that they are directly provided to the respective receiving Node B, which is in contrast to Layer 3 signaling (e.g. RRC) which is currently terminated in RNC according to the UMTS specifications.

Another way of reporting buffer occupancy in UE to the network is traffic volume measurement reporting as specified in the UMTS standard (see for example section 10 in 3GPP TS 25.331: "Radio Resource Control (RRC) protocol specification", version 6.1.0 available at http://www.3gpp.org). Serving RNC may start, stop or modify a number of parallel measurements in the UE and each of these measurements may be controlled independently of each other. For UEs in Cell_DCH, that is for UEs receiving E-DCH, dedicated measurement control messages may be transmitted from the network.

For example, a UE may send RLC buffer occupancy reporting (RLC buffer payload, average RLC buffer payload and variance of RLC buffer payload) by RRC messages to the RAN network element controlling RRC (e.g. SRNC in the present UMTS architecture). The traffic volume measurement information may e.g. contain data for RLC buffer occupancy of each logical channel. The reporting on traffic volume measurements may be done periodically or event-driven, which are options that may be configured by the RRC controlling network entity. It may be considered not to configure these messages for all UEs since that may create a large increase in interference on the uplink. Moreover, it should be noted that the measurements are part of RRC signaling (Layer 3) and hence may be processed by the RAN network element controlling RRC (e.g. SRNC in the present UMTS architecture).

The reports on the buffer occupancy may also be conveyed in control messages of time and rate controlled scheduling mode. When logical channel multiplexing is not carried out (i.e. the individual logical channels from the RLC entity are not multiplexed to MAC-d flows), the amount of information gained by buffer occupancy reporting is approximately the same as the amount of information gained by traffic volume measurement reporting.

Hence, generally either Layer 1 buffer occupancy reporting to the Node B directly or RRC traffic volume measurements may be used by the Node B to decide on scheduling mode switching. In case of a UMTS architecture in which RRC is not terminated in the Node B (see for example 3GPP TS 25.897: "Technical Specification Group Radio Access Network; Feasibility Study on the Evolution of UTRAN Architecture; (Release 6)" available at http://www.3gpp.org), the traffic volume measurements may be forwarded to same.

Fig. 11 and 12 show exemplary embodiment of the invention in which buffer occupancy reports or traffic volume measurement reports are used to decide on switching the scheduling mode.

In Fig. 11 and 12 the UE is switched from the rate controlled scheduling mode (RCSM) to the time and rate controlled scheduling mode (TRCSM) and back to the rate controlled scheduling mode (RCSM). The horizontal dashed line is intended to illustrate a threshold of the buffer occupancy at the UE which may be used for triggering a switching in the scheduling mode.

Upon having decided about using the time and rate controlled scheduling mode for the observed UE, the Node B may obtain buffer occupancy reports or traffic volume measurement report information allowing the Node B to estimate the present buffer occupancy for uplink transmissions of the UE. As shown in Fig. 11 the Node B may decide to change scheduling to the rate controlled scheduling mode as soon as the estimated/determined buffer occupancy of the UE drops below the buffer occupancy threshold.

Alternatively, as shown in Fig. 12, the switching may only be performed if several consecutive reports indicate a buffer occupancy lower than the threshold. For example, though the second report in Fig. 12 indicates a buffer occupancy at the UE lower than the threshold, switching of the scheduling mode is not performed due to the next, third report again indicating a buffer occupancy at the UE higher than the threshold: However, since reports six and seven consecutively indicate a buffer occupancy at the UE lower than the threshold the Node B may decide to switch to another scheduling mode, e.g. rate controlled scheduling mode.

Considering the exemplary case of switching from time and rate controlled scheduling mode to rate controlled scheduling mode, it should be noted that no explicit signaling of this switching may be performed. The scheduling assignment provides the mobile terminal with parameters for data transmission that may be valid for a predetermined or specified time period only. In case the time period elapsed the mobile terminal may automatically switch to rate controlled scheduling mode. However, it may be also possible, that by transmitting either "rate up" or "rate down" commands to the mobile terminal, same is - so to say - explicitly informed on the switching of the scheduling mode.

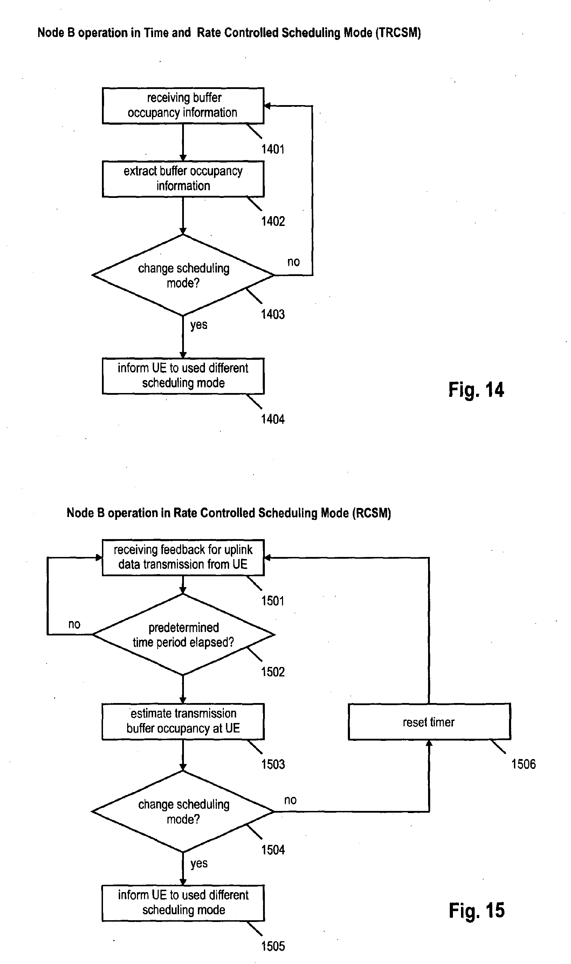

In Fig. 14 an exemplary operation of this switching mechanism according to an embodiment of the invention is shown. The Node B may obtain 1401 e.g. traffic volume measurement information from the RRC controlling RAN entity terminating the RRC protocol to the observed UE. Alternatively, information on the occupancy of Priority Queues of MAC-d flows may be obtained from the controlling messages of the rate and time controlled scheduling mode. As the measurements are sent per logical channel that is per buffer of RLC, Node B may calculate 1402 aggregate buffer occupancy in the UE to decide about mode switching.

Next, the Node B may determine 1403 whether the scheduling mode for the observed UE should be changed or not. Thereby the operations as described above with respect to Fig. 11 and 12 may be employed. If it is decided to switch the scheduling mode to rate controlled scheduling mode, the Node B will start sending controlling messages corresponding to rate controlled scheduling mode after expiry of the time for which resource assignment in the current rate and time controlled scheduling mode are valid. Therefore it is assumed that scheduling messages of respective scheduling mode are employed to indicate the scheduling mode to be used. If it is not decided to change scheduling mode, the next report may be evaluated.

The mechanism described in Fig. 14 may be also used to switch e.g. from time and rate controlled scheduling to rate controlled scheduling and vice versa. Depending on the presently used scheduling mode different threshold for the UE's buffer occupancy may be configured at which switching is performed.

However there may be situations in which buffer occupancy reporting may not be available in the rate controlled scheduling mode. One reason may be that the amount of control messages in this mode is much higher than the amount of messages in time and rate controlled mode and reporting of buffer occupancy by each UE would create high interference on the uplink.

Hence, according to a further embodiment of the invention different indices of buffer occupancy may be used when a UE is operated in rate controlled scheduling mode. According to a further embodiment of the invention, the Node B may observe "rate up" requests from a particular UE during a predetermined time period that may be referred to as an "activity timer". Based on this observed number of "rate up" requests the Node B may estimate the buffer occupancy of the UE: in case many "rate up" requests are observed in the predetermined time period, this may indicate that the occupancy of the UE's transmission buffer is high. Hence, the Node B may decide to switch that UE to time and rate controlled mode if sufficient number of requests were observed during that time.

This operation is shown for exemplary purposes in Fig. 13. The UE is initially operated in rate controlled scheduling mode (RCSM) and the Node B observes the number of "rate up" requests (indicated by the vertical arrows) received in a predetermined time period T. In case the number of observed "rate up" requests is larger than a predetermined threshold the Node B may decide to change the scheduling mode of the observed UE to time and rate controlled scheduling mode (TRCSM).

Alternatively, in another embodiment of the invention the RRC controlling RAN entity terminating the RRC protocol to the observed UE (e.g. SRNC) may provide the results of traffic volume measurement reporting to the observing Node B. To minimize the amount of lub/lur traffic, this may be for example done on an event-triggered basis. For example, only in case certain threshold buffer occupancy is exceeded, the RRC controlling entity of the RAN may provide results to the Node B. If sufficient number of these results were observed during the predetermined time period controlled by the activity timer, the Node B may decide to switch UE from rate controlled scheduling mode to time and rate controlled scheduling mode.

Considering the example of switching from rate controlled scheduling mode to time and rate controlled scheduling mode, this may be indicated to the mobile terminal by sending a scheduling assignment. In case of receiving this message from the base station the mobile terminal will carry out data transmission for the respective uplink channel according to the time and rate controlled scheduling mode.

Fig. 15 shows an exemplary flow chart of an UE observation process carried out by a Node B according to an embodiment of the invention. Initially it may be assumed that the UE is scheduled in rate controlled scheduling mode. The Node B may receive 1501 feedback for the uplink data transmission of the observed UE. As outlined above this feedback may be "rate up" requests received from the UE (or may be feedback information on traffic volume measurements or buffer occupancy reports). Please note that in case RRC control resides in the Node B deciding on the scheduling mode of the observed UE, same may have traffic volume measurement report information of the observed UE readily available for determining whether the UE should switch to another scheduling mode.

In case the "rate up" requests received in a predetermined time period are observed, the Node B may determine e.g. by using the activity time whether the predetermined time period has elapsed 1502. In case of being reported the buffer occupancy or related information from the RAN entity terminating the RRC protocol to the UE, this step may not be necessary.

Next, the Node B may estimate 1503 the buffer occupancy at the UE based on the received feedback. This may be for example done by determining whether the number of "rate up" requests within the predetermined time period is larger than a threshold value. Alternatively, Node B may use the results of traffic volume measurement reporting. These results may be sent from the RAN entity terminating the RRC protocol to the Node B. As the measurements are sent per logical channel that is per buffer of RLC, Node B may calculate aggregate buffer occupancy in the UE to decide about mode switching. Based on this obtained information on the estimated buffer occupancy at the UE, the Node B may then decide 1504, whether switching the scheduling mode is appropriate. If so, the UE may be informed 1505 to use another scheduling mode (e.g. time and rate controlled scheduling mode). For example, the scheduling messages transmitted by the Node B may be used for this purpose, as they indicate the respective scheduling mode to use. If it is decided not to switch the scheduling mode the activity timer to control the predetermined time period may be reset 1506 and the procedure is restarted.

As outlined above, it is possible to obtain traffic volume measurements from the UEs, however the configuration of these measurements for a number of UEs may create additional uplink interference. Hence, when deciding on switching from rate controlled scheduling mode to time and rate controlled scheduling mode, it may be preferred that Node B may rather observe the number of "rate up" requests during the time period set by the activity timer. Moreover, due to the SRNC not being aware of scheduling requests, RNC-controlled mode switching may be slower than Node B-controlled switching. It is therefore assumed that Node B makes switching decision.

Switching from time and rate controlled scheduling mode to rate controlled scheduling mode may be based on buffer occupancy reports that are already available in time and rate controlled scheduling mode. Since time and rate controlled scheduling mode enables higher data rates for transmission of a subset of UEs, while rate controlled scheduling mode enables lower data rates for transmission of all UEs, switching to rate controlled scheduling mode is not seen as critical and does not have to be based on predefined activity timer.

In a further embodiment of the invention it is foreseen that the RRC controlling RAN entity - e.g. SRNC - may configure activity timer by application protocol messaging, i.e. may thereby configure the predetermined time period. Another solution to allow the RRC controlling RAN entity to configure the scheduling mode switching same a preconfigured predetermined time period may be used and the number of "rate up" requests triggering a scheduling mode switching or the buffer occupancy threshold(s) in case of using buffer occupancy reporting or traffic volume measurement reporting to deciding on the switching of the scheduling mode may also be configured.

In another embodiment of the invention, an EDCH Information Element (IE) "activity timer" is defined within RL Setup message of RNSAP Radio Link Setup DCH Procedure and that EDCH IE "activity timer" is defined within RL Setup message of NBAP Radio Link Setup Common Procedure. In case of using the alternative parameters for configuring the scheduling mode switching procedure, respective IE may be alternatively or optionally included in these messages.

Further, another embodiment of the invention different traffic class types or priorities may be taken into account by the switching procedure. For example, the UEs may have different traffic types being transmitted on an EDCH. Furthermore, interactive type of traffic transmitted on EDCH may have different traffic handling priorities. Traffic Class and Traffic Handling Priorities may be provided from RRC controlling RAN entity to the Node B controlling scheduling mode switching. For example, different values of the activity timer or different buffer occupancy thresholds may be configured for different traffic classes and/or traffic handling priorities of interactive class.

For example, the lowest value of the activity timer may be configured to match a GBR (guaranteed bit rate) traffic while the highest value of the activity timer is be configured for lowest traffic handling priority of interactive class.

If there are multiple traffic flows of different traffic classes and/or traffic handling priorities, the activity timer or different buffer occupancy thresholds may be configured for each of them. For this purpose, application protocol messaging may be extended accordingly, i.e. either new messages conveying the parameters or additional IE(s) within existing messages may be defined for this purpose.

Another embodiment of the invention relates to scheduling mode switching during soft handover operation. For example in case EDCH operation is controlled by a single Node B during soft handover, this Node B may be referred to as serving Node B. It may be assumed that there is serving Node B controlling scheduling mode switching during soft handover. Whenever serving Node B is changed, corresponding values for activity timers or buffer occupancy thresholds may be configured by the RRC controlling RAN entity.

For example, a serving Node B for an EDCH may be chosen so that it is identical to the serving Node B for High Speed Downlink Shared Channel (HS-DSCH). Since no soft handover is presently allowed for HS-DSCH operation, serving Node B for HS-DSCH (and hence for EDCH) is changed after cell change procedure for HS-DSCH procedure is executed. In this case RRC controlling RAN entity will configure corresponding values for activity timers / buffer occupancy thresholds for new serving Node B.

Another embodiment of the invention relates to the implementation of the above described various embodiments using hardware and software. It is recognized that the various above mentioned methods as well as the various logical blocks, modules, circuits described above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

## Claims

1. A method for controlling by a base station the scheduling mode used by a mobile terminal for carrying out uplink data transmissions within a mobile communication network, the method comprising the following steps performed by the base station:
receiving feedback for controlling the scheduling of uplink data transmission between the mobile terminal and the base station,
estimating the buffer occupancy at the mobile terminal based on the feedback received, and
switching the mobile terminal from a scheduling mode presently used for uplink transmission to another scheduling mode based on the estimated buffer occupancy.

2. The method according to claim 1, wherein the scheduling mode is switched in case the estimated buffer occupancy is above or below a predetermined threshold.

3. The method according to claim 1, wherein the mobile terminal carries out uplink data transmission in a rate controlled scheduling mode, and wherein the buffer occupancy is estimated based on the number of requests to increase the rate for uplink transmissions received by the base station within a predetermined time period.

4. The method according to claim 3, wherein the base station decides to switch the mobile terminal to a time and rate controlled scheduling mode, if the number of requests to increase the rate for uplink transmissions received by the base station within the predetermined time period is above a predetermined threshold.

5. The method according to one of claims 1 to 4, wherein the mobile terminal carries out uplink data transmission in a time and rate controlled scheduling mode, and wherein feedback is received in form of reports on the priority-queue occupancy of at least one data flow at the mobile terminal and the buffer occupancy is estimated based on said reports.

6. The method according to one of claims 1 to 4, wherein the mobile terminal carries out uplink data transmission in a time and rate controlled scheduling mode, and wherein feedback is received in form of traffic volume measurement reports indicating the RLC buffer occupancy for at least one logical channel of the mobile terminal and the buffer occupancy is estimated based on said traffic volume measurement reports.

7. The method according to claim 6, further comprising the step of receiving the traffic volume measurement reports from a network element terminating radio resource control protocol entity on the network side.

8. The method according to one of claims 1 to 7, wherein the base station decides to switch the mobile terminal to a rate controlled scheduling mode, if the estimated buffer occupancy is below a predetermined buffer occupancy threshold.

9. The method according to one of claims 1 to 3, wherein the predetermined time period and/or the threshold is configured by a network element terminating radio resource control protocol entity on the network side, wherein the buffer occupancy threshold indicates a threshold above or below which a switching of the scheduling mode by the base station is performed.

10. The method according to claim 9, further comprising the step of using individual predetermined time periods and/or thresholds for estimating the buffer occupancy depending on a traffic class type and/or priority of the uplink transmission data transmitted by the mobile terminal.

11. The method according to claim 10, wherein the individual predetermined time periods and/or individual thresholds are configured by the network element terminating radio resource control protocol entity on the network side.

12. The method according to one of claims 9 to 11, wherein the predetermined time period and/or the threshold is configured by a Radio Link Setup message of the NBAP protocol or the RNSAP protocol.

13. A base station for controlling the scheduling mode used by a mobile terminal for carrying out uplink data transmissions within a mobile communication network, the base station comprising:
receiving means for receiving feedback for controlling scheduling of uplink data transmission between the mobile terminal and the base station, and
processing means for estimating the buffer occupancy at the mobile terminal based on the feedback received, and
for switching the mobile terminal from a scheduling mode presently used for uplink transmission to another scheduling mode based on the estimated buffer occupancy.

14. The base station according to claim 13, further comprising means adapted to perform the steps of the method according to one of claims 1 to 12.

15. A mobile communication system comprising a base station according to claim 13 or 14 and a mobile terminal.

16. A computer-readable medium for storing instructions that, when executed by a processor of a base station, cause the base station to control the scheduling mode used by a mobile terminal for carrying out uplink data transmissions within a mobile communication network, by
receiving feedback for controlling scheduling of uplink data transmission between the mobile terminal and the base station,
estimating the buffer occupancy at the mobile terminal based on the feedback received, and
switching the mobile terminal from a scheduling mode presently used for uplink transmission to another scheduling mode based on the estimated buffer occupancy.

17. The computer readable medium according to claim 16, further storing instructions that, when executed by the processor of a base station, cause the base station to perform the steps of the method according to one of claims 1 to 12.
